# FASCICULE DE BREVET EUROPEEN

(11) **EP 2 064 023 B1**
(45) Date de publication et mention de la délivrance du brevet: **19.03.2014**
(21) Numéro de dépôt: 07823407.7
(22) Date de dépôt: 08.08.2007
(51) Int. Cl.: B23K 26/26, B23D 15/00

(54) **DISPOSITIF ET PROCÉDÉ DE RABOUTAGE PAR SOUDURE DE BANDES DE TÔLES**
VORRICHTUNG UND VERFAHREN ZUR SCHWEISSVERBINDUNG VON BAHNENMETALLSTREIFEN
DEVICE AND PROCESS FOR THE WELD JOINING OF SHEET METAL STRIPS

(30) Priorité: 22.09.2006 FR 0608349
(43) Date de publication de la demande: 03.06.2009
(73) Titulaire: Siemens VAI Metals Technologies SAS, 42400 Saint-Chamond (FR)
(72) Inventeur: BARJON, Stéphane, 42210 Montrond les Bains (FR); THOMASSON, Hervé, 38200 Seyssuel (FR); PERRET, Jean, 42600 Montbrison (FR)
(74) Mandataire: Fischer, Michael
(86) Numéro de dépôt international: PCT/FR2007/001355
(87) Numéro de publication internationale: WO 2008/037861

(56) Documents cités:
- EP-A- 1 157 753
- EP-A1- 0 482 223
- EP-A1- 0 974 408
- EP-A2- 0 389 897
- JP-A- 62 187 584
- US-A- 4 626 651
- US-A- 6 161 460

## Description

La présente invention concerne, de façon générale, le domaine des dispositifs de soudage en bout de deux bandes de tôles métalliques au moyen d'un faisceau laser, selon le préambule de la revendication 1 et de raboutage par soudure laser selon le préambule de la revendication 12. JP 62 187 584 A décrit un tel dispositif et une telle methode. Cette invention s'applique particulièrement au soudage pratiqué pour le raccordement de bobines de tôles entre elles à l'entrée des lignes de défilement de tôles en continues dans l'industrie sidérurgique.

Plus particulièrement, l'invention concerne un dispositif de raboutage par soudure Laser de bandes de tôles défilant dans une installation sidérurgique de traitement en continu comportant au moins :
- un châssis principal ;
- une unité de soudage au Laser comportant un générateur de faisceau Laser pour le soudage de bandes de tôles à rabouter ;
- une unité de mors de serrage portée par ledit châssis pour le serrage de bandes de tôles ;
- une unité de cisaillage pour le cisaillage de têtes et queues de bandes de tôles à rabouter.

Les lignes de fabrication, de transformation et de revêtement des aciers sont aujourd'hui conçues pour un fonctionnement en continu enchainant souvent plusieurs traitements successifs sans étapes intermédiaires afin d'améliorer la productivité des installations.

Pour cela il est fréquemment nécessaire de souder entre elles deux tôles afin d'obtenir une bande de tôle sans discontinuité apte à défiler dans la ligne sidérurgique. Pour cela, on raboute donc par soudure une queue d'une bande de tôle engagée sur la ligne avec une tête d'une autre bande dite bande suivante.

Le défilement de la bande devant rester continu sur l'ensemble de la ligne et le raboutage étant réalisé à poste fixe, les lignes continues comportent des dispositifs qui accumulent la bande par bouclages multiples pendant le raboutage puis la restituent. Un tel dispositif d'accumulation de ce type est décrit dans le brevet ÈP 0 974 408.

L'opération de raboutage est réalisée par une soudeuse qui comporte, en plus du dispositif de soudage proprement dit (en bout par étincelage, par résistance à la molette, MIG, Laser) deux mors de serrage destinés à immobiliser les tôles, l'un situé en aval par rapport au sens de défilement de la bande de tôle et destiné à immobiliser la queue de la bobine engagée dans la ligne, l'autre étant situé en amont afin d'immobiliser sélectivement la tête de la bobine que l'on vient d'introduire.

Ces soudeuses doivent être capables de produire des joints de haute qualité. En effet, la rupture d'une soudure en cours de défilement de la bande de tôle ou même la nécessité de refaire une soudure jugée incorrecte entrainent des pertes de production importantes et les taux de rupture ou de re soudage doivent rester les plus bas possibles.

Les éléments décisifs de la qualité d'une soudure sont essentiellement :
- la qualité métallurgique du joint soudé, particulièrement pour les aciers susceptibles d'altérations métallurgiques de la zone affectée thermiquement par la soudure ;
- la section soudée qui devrait idéalement être exempte de surépaisseur et de sous-épaisseur ;
- la continuité et la compacité du joint soudé.

La qualité métallurgique dépend également du procédé de soudage utilisé et du cycle thermique induit par ce procédé dans la zone affectée, ainsi que de divers traitements de pré et post-chauffage ou de recuit pratiqués localement dans la soudeuse elle-même ou immédiatement en aval.

L'état de la section soudée dépend du procédé et des moyens de parachèvement mis en oeuvre après soudage. Le soudage en bout par étincelage produit un bourrelet qu'il est nécessaire de raboter et les soudeuses par étincelage connues dans le domaine sous l'appellation « flash-butt » sont généralement équipées d'une unité intégrée de rabotage. Le soudage par résistance à la molette produit également une surépaisseur due au recouvrement des tôles à souder et qui doit le plus souvent être écrasée par des dispositifs à galets intégrés aux soudeuses. Le soudage Laser permet une gestion fine de la section soudée associée par ailleurs à une zone affectée par la chaleur très limitée.

La continuité et la compacité du joint dépendent essentiellement des paramètres de soudage utilisés. Ces paramètres sont pour l'essentiel électriques et sont généralement facile à gérer de manière fiable.
Un autre paramètre occupe toutefois une place primordiale tant en ce qui concerne la continuité et la compacité du joint soudé que sa section, il s'agit de la rectitude des bords à souder et leur positionnement relatif pendant le soudage.
Afin de garantir la qualité de la soudure de raboutage, il est nécessaire que les extrémités de bandes à souder soient alignées et rectilignes. Pour cela, les installations de raboutage comportent divers dispositifs de centrage en amont et aval de la soudeuse qui permettent d'aligner les bandes de tôles et des moyens de cisaillage des têtes et queues de bandes de tôles.
Les soudeuses comportent ainsi généralement des moyens de cisaillage permettant de réaliser la coupe des extrémités des bandes à raccorder.
L'élargissement considérable des gammes de nuances et d'épaisseur d'aciers traités dans les lignes continues et les exigences de productivité sans cesse accrues orientent depuis déjà 20 ans les soudeuses de raboutage en ligne vers l'utilisation du procédé Laser.
Le procédé Laser permet en effet d'étendre la gamme des produits (tôles à souder) vers des épaisseurs très fines. Il permet aussi de limiter les zones thermiquement affectées d'une très grande variété de nuances parmi lesquelles comptent les aciers de métallurgie spéciale développés pour l'industrie automobile.
Historiquement, les soudeuses Laser ont été développées sur des architectures de soudeuses du type précité « flash-butt » et par résistance qu'elles avaient pour vocation de remplacer.
Les systèmes de cisaillage des têtes et queues de bandes sont hors lignes de défilement de bandes de tôle, et sont installés sur des supports en col de cygne qui sont introduits dans le bâti de la soudeuse pour réaliser les deux coupes puis remis hors ligne afin de laisser place à l'opération de soudage.
Un tel système de cisaillage utilisé conjointement avec le procédé Laser est décrit dès 1984 dans le document brevet US 4 , 626, 651.

Un dispositif de raboutage du type précédemment défini, permettant un tel raboutage par soudage de bandes de tôles, est par exemple décrit dans le document brevet EP 1 157 753. Ce dispositif de l'art antérieur qui est présenté à la figure 1 dispose d'une unité de soudage 4 à poste fixe par rapport au châssis principal 1 et donc par rapport à un axe « A » de défilement de bandes de tôles. Cette unité de soudage 4 comporte un générateur de faisceau laser 45. Ce dispositif 0 comporte également d'une unité de cisaillage C mobile par rapport au châssis principal 1 de manière faire varier la distance d'éloignement entre l'unité de cisaillage C et le châssis principal 1, l'unité de cisaillage étant ainsi mobile entre une position de cisaillage dans laquelle l'unité de cisaillage C est axée selon l'axe de défilement de bande « A » et un position de retrait dans laquelle l'unité de cisaillage C est désaxée par rapport à ce même axe.

Egalement, le document JP 62 187584 A décrit un dispositif de raboutage par soudure Laser de bandes de tôles défilant dans une installation sidérurgique de traitement en continue comportant au moins un châssis principal, une unité de soudage de bandes de tôles à rabouter, une unité de mors de serrage protée par ledit châssis pour le serrage de bandes de tôles, cette unité de mors comportant des premiers et second mors de serrage, chacun adapté pour serrer une bande de tôle, une unité de cisaillage pour le cisaillage de têtes et queues de bandes de tôles à rabouter, dans lequel l'unité de cisaillage comporte un porte lames supérieur, des première et seconde lames supérieures fixées sur , ledit porte lames supérieur de manière à être distantes entre elles, et des première et seconde lames inférieures mobiles par rapport aux lames supérieures et adaptées pour cisailler une bande de tôle et en ce que l'unité de cisaillage comporte au moins une structure de liaison desdites premières lames, cette structure de liaison étant reliée fixement audit châssis, l'unité de soudage comportant en outre une tête de soudage montée coulissante.

Dans ce contexte, la présente invention a pour but de proposer un dispositif de raboutage permettant d'améliorer la précision de raboutage de bandes de tôles afin de permettre une homogénéité de soudure et afin par exemple de réduire les risques d'arrêt de défilement de bandes de tôles par rupture de soudure.

A cette fin, le dispositif de raboutage par soudure laser de bandes de tôles de l'invention est conforme à la définition qu'en donne la revendication 1.

L'invention permet une amélioration de la précision et de répétitivité des coupes de l'unité de cisaillage qui est à poste fixe par rapport au châssis du dispositif (c'est-à-dire fixe par rapport au châssis) grâce à la structure de liaison des premières lames qui est reliée fixement audit châssis.
Grâce à cette amélioration de la qualité de cisaillage les bords de bandes de tôles, ces bandes peuvent être directement soudées par Laser sans forcément nécessiter de moyens de mesure et de correction de la position des extrémités de bandes.
Grâce à cette amélioration de la précision des coupes l'invention permet de simplifier le procédé de raboutage de bandes de tôles puisqu'il n'est plus forcément nécessaire de repositionner les bandes de tôles cisaillées l'une par rapport à l'autre pour les rendre parallèles entre elles avant de les souder.

Le fait d'avoir des lames supérieures portées par un même porte lames permet de fixer ces lames supérieures l'une par rapport à l'autre ce qui améliore la précision de chaque coupes de bandes réalisées par les lames supérieures ainsi que la précision de positionnement relatif des coupes. Il en résulte une amélioration de la qualité du soudage des bandes ainsi coupées précisément. Le fait que le porte lames supérieur et les lames inférieures soient reliés entre eux via la structure de liaison fixée au châssis améliore également la précision des coupes.
Le fait que la tête de soudage puisse être déplacée entre le porte lames supérieur et les lames inférieures permet également d'améliorer la précision de positionnement de cette tête par rapport au porte lames supérieur et en conséquence d'améliorer la précision de positionnement du faisceau laser projeté via la tête de soudage par rapport aux bords de bandes préalablement découpés par les lames. Au global cette combinaison de caractéristiques permet d'augmenter la qualité de la soudure en permettant une précision de découpe et de positionnement des bords de tôles vis-à-vis du faisceau Laser.
Préférentiellement les lames inférieures et les lames sont disposées pour être mobiles entre lesdits premier et second mors.
On peut par exemple faire en sorte que l'unité de cisaillage comporte en outre :
- une seconde lame supérieure distante de la première lame supérieure, ces lames supérieures étant fixes l'une par rapport à l'autre et ;
- une seconde lame inférieure distante de la première lame inférieure, ces lames inférieures étant fixes l'une par rapport à. l'autre, les secondes lames étant mobiles l'une par rapport à l'autre et étant adaptées pour cisailler une bande de tôle.

Ce mode de réalisation permet de découper deux bandes de tôles simultanément, ce qui permet un gain de temps dans l'opération de cisaillage / découpe.
Préférentiellement les lames supérieures et inférieures sont parallèles entre elles, les premières lames étant coulissantes le long et de part et d'autre d'un premier plan de cisaillement et les secondes lames étant coulissantes le long et de part et d'autre d'un second plan de cisaillement.
Ce parallélisme entre,lames permet d'obtenir des découpes de bords de bandes de tôles parallèles entre elles, en l'occurrence ces découpes sont une queue de bande d'une tôle et une découpe d'une tête de bande d'une autre tôle. Ce parallélisme des lames permet également de faciliter le soudage puisque les extrémités à souder sont découpées parallèles entre elles et peuvent donc être rapprochées l'une de l'autre tout en conservant un espace inter tôles maîtrisé et relativement constant sur toute la largeur des tôles (c'est à dire le long des découpes) ce qui permet d'obtenir une soudure homogène.
Pour cela les lames inférieures sont préférentiellement montées sur un support porte outils inférieur commun aux lames inférieures et les lames supérieures sont préférentiellement montées sur un porte lames supérieur aussi appelé support porte outils supérieur commun aux lames supérieures.

On peut par exemple faire en sorte que l'unité de mors de serrage comporte des premier et second mors de serrage chacun adapté pour serrer une bande dé tôle et que lesdites lames soient disposées pour être mobiles entre lesdits premier et second mors.
Dans ce mode de réalisation les plans de cisaillage sont situés entre les premier et second mors.

On peut par exemple faire en sorte que ladite structure de liaison comporte deux montants reliés fixement audit châssis principal et une poutre s'étendant entre ces montants, ladite au moins une lame supérieure étant supportée par l'intermédiaire de ladite poutre.
Ce mode de réalisation est avantageux car les montants reliés entre eux par une poutre forment une structure de liaison des lames rigide par rapport par exemple à la rigidité d'une structure en col de cygne.

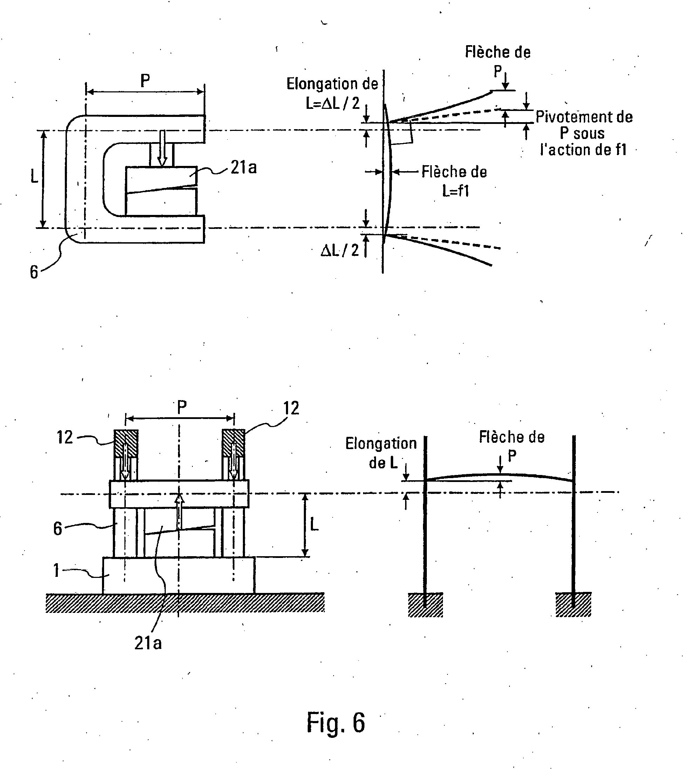

Cette rigidité accrue de la structure de liaison des lames favorise donc un précision de positionnement des lames tout au long de l'effort de cisaillage. Cet avantage sera présenté par la suite en référence à la figure 6 qui compare une unité de cisaillage comportant une structure de liaison en col de cygne avec une unité de cisaillage comportant une unité de liaison dotée de deux montants reliés par une poutre.

On peut par exemple faire en sorte que ladite structure de liaison comporte des vérins de cisaillage supportés par ladite poutre pour déplacer lesdites première et seconde lames supérieures par rapport audites première et seconde lames inférieures. Ce mode de réalisation permet de localiser les efforts de coupe sur la poutre qui est un endroit rigide de la structure de liaison ce qui améliore ainsi la qualité de la coupe.

On peut par exemple faire en sorte que les dites lames supérieures et inférieures soient montées mobiles de manière à adopter une position de croisement desdites lames supérieures et inférieures dans laquelle les première lames inférieure et supérieure sont éloignées entre elles d'un premier jeu de cisaillage et dans laquelle les seconde lames inférieure et supérieure sont éloignées entre elle d'un second jeu de cisaillage, le dispositif comportant en outre des moyens mécaniques d'actionnement adaptés pour faire varier lesdits premier et second jeu de cisaillage sous l'action d'un système électronique de contrôle de jeu de cisaillage.

L'utilisation de moyens mécaniques d'actionnement disposés pour faire varier les jeux de cisaillage en fonction d'une commande provenant du système électronique de contrôle de jeu est particulièrement avantageux car cela permet d'avoir une qualité de coupe réglable par modification des jeux de cisaillage.
Ces jeux de cisaillage sont choisis en fonction de caractéristiques des bandes de tôles à cisailler.

On peut préférentiellement faire en sorte que lesdits moyens mécaniques d'actionnement soient adaptés pour déplacer lesdites lames inférieures l'une par rapport à l'autre et ainsi faire varier lesdits premier et second jeux de cisaillage.

Préférentiellement le système électronique de contrôle comporte des moyens de collecte de données adaptés pour collecter des données propres à la bande de tôle à cisailler et adapté pour faire varier automatiquement lesdits jeux de cisaillage à l'aide desdits moyens d'actionnement en fonction desdites données collectées. Ces données sont par exemple l'épaisseur de la tôle, sa largeur, sa dureté.

On peut par exemple faire en sorte que l'unité de soudage au laser comporte une structure en col de cygne montée en translation par rapport audit châssis et une tête de soudage portée par la structure en col de cygne.

Cette structure en col de cygne possède une rigidité suffisante pour supporter des efforts de soudage et permet donc le déplacement de la tête de soudage en vis-à-vis de zones de bandes à souder tout en réduisant les imprécisions de guidage de la tête de soudage.

On peut par exemple faire en sorte que l'un au moins des montants comporte une découpe traversant ce montant et qu'au moins une portion de ladite structure en col de cygne portant la tête de soudage soit disposée à l'intérieur de cette découpe de manière à traverser ce montant et à pouvoir y coulisser.

Ce mode de réalisation permet de positionner la structure en col de cygne dans une zone du dispositif de l'invention relativement rigide et peu déformable qu'est la zone à proximité de la poutre de soutien de lame (s) supérieure(s). Ce mode de réalisation est avantageux car il réduit le risque de déformation du dispositif sous les efforts générés lors du soudage et améliore ainsi l'homogénéité de la soudure.

On peut par exemple faire en sorte que la tête de soudage soit montée coulissante par rapport à la structure en col de cygne par l'intermédiaire d'un système de glissières.

Ce mode de réalisation permet de déplacer la tête de soudage pour effectuer le soudage sans avoir à déplacer la structure en col de cygne qui est relativement lourde par rapport à la tête de soudage, ce mode de réalisation permet d'avoir une maîtrise de la vitesse d'avance de la tête de soudage.

On peut par exemple faire en sorte que le dispositif de l'invention comporte des premier et second galets reliés mécaniquement à la tête de soudage de manière à être mobile en translation avec cette tête de soudage, la liaison mécanique des premier et second galets étant adaptée pour positionner le premier galet en vis-à-vis d'une première face d'un mors de l'unité de mors de serrage et pour positionner le second galet en vis-à-vis d'une seconde face d'un mors de l'unité de mors de serrage, chacun de ces galets étant adapté pour presser une bande de tôle contre la face de mors en vis-à-vis de laquelle il est positionné.

Ce mode de réalisation est avantageux car il permet de limiter les dispersions de positionnement de la tête de soudage vis-à-vis des bords de bandes de tôles à souder ce qui favorise l'homogénéité de la soudure ainsi obtenue.

On peut par exemple faire en sorte que la liaison mécanique des premier et second galets comporte au moins un vérin hydraulique adapté pour approcher et éloigner les premier et second galets des première et seconde faces de mors respectives.

On peut par exemple faire en sorte que l'unité de mors de serrage comporte des premier et second mors de serrage éloignés l'un de l'autre et des moyens mécaniques de liaison des mors audit châssis principal, ces moyens mécanique de liaison des mors audit châssis principal étant adaptés pour déplacer lesdits premier et second mors l'un par rapport à l'autre et par rapport au châssis principal.

Ce mode de réalisation permet de rapprocher et positionner les bandes de tôles après les avoir découpées sans avoir à desserrer les mors. Il en résulte un gain de temps et de précision dans le procédé de raboutage.

On peut par exemple faire en sorte que ledit premier mors possède une mâchoire inférieure et une mâchoire supérieure et que l'une de ces mâchoires de premier mors soit plus courte que l'autre de manière à permettre, lors du cisaillage d'une bande de tôle, le passage d'une desdites lames, cette lame étant ainsi adaptée pour être disposée dans une position de compression de ladite bande de tôle cisaillée contre la mâchoire la plus longue du premier mors.

Ce mode de réalisation est avantageux car les lames sont ainsi positionnées au plus près des mors ce qui limite la distance d'éloignement entre un plan de cisaillage d'une tôle et le mors portant cette tôle.

On peut par exemple faire en sorte que ledit second mors possède une mâchoire inférieure et une mâchoire supérieure et que l'une de ces mâchoires du second mors soit plus courte que l'autre de manière à permettre, lors du cisaillage d'une bande de tôle, le passage d'une desdites lames, cette lame étant ainsi adaptée pour être disposée dans une position de compression de ladite bande de tôle cisaillée contre la mâchoire la plus longue du second mors.

Ce mode de réalisation et complémentaire du précédent et présente les mêmes avantages.

On peut par exemple faire en sorte que le dispositif de l'invention comprenne une butée escamotable mobile entre une position haute dans laquelle cette butée escamotable se trouve disposée dans un espace situé entre les mors de l'unité de mors de serrage et une position basse dans laquelle cette butée se trouve éloignée de l'espace situé entre les premier et second mors.

Cette butée escamotable en position basse se trouve en dehors d'un plan de défilement de la bande de tôle pour que cette bande de tôle puisse défiler librement dans l'unité de cisaillage. En position haute, cette butée escamotable qui s'étend entre les mors est alors utile:
- pour servir au positionnement d'une première bande dé tôle maintenue dans le premier mors vis-à-vis des premières lames et ;
- pour servir au positionnement d'une seconde bande de tôle maintenue dans le second mors vis-à-vis des secondes lames.
En effet lorsque la butée est en position haute on peut alors l'utiliser pour,buter la queue d'une première bande de tôle et la tête de la seconde bande de tôle et ainsi les positionner vis-à-vis de l'unité de cisaillage et donc du châssis principal.
Cette butée escamotable appartient préférentiellement à l'unité de cisaillage et s'étend préférentiellement entre des plans de coulissement des premières et secondes lames.
L'invention concerne également un procédé de commande du dispositif de l'invention selon l'une quelconque des modes de réalisation précités, caractérisé en ce que l'on serre une queue d'une bande de tôle à rabouter à l'aide du premier mors de serrage et on serre une tête d'une bande de tôle à rabouter à l'aide du second mors de serrage puis on cisaille la tête et la queue des dites bandes de tôles à l'aide de ladite unité de cisaillage puis on rapproche et on positionne les bandes de tôles ainsi cisaillées et on les soude à l'aide d'un faisceau Laser, ces opérations de cisaillement, de rapprochement, de positionnement et de soudage étant réalisées sans desserrer les mors.
L'invention concerne également un procédé de raboutage par soudure Laser de bandes de tôles défilant dans une installation sidérurgique de traitement, selon la revendication 12.

Les procédés selon l'invention permettent d'améliorer la qualité de la soudure puisqu'ils permettent d'éviter des imprécisions qui sont normalement générées par des repositionnements des bandes lors d'opération répétées de serrage / desserrage.

Préférentiellement pour la mise en oeuvre du procédé de raboutage de l'invention, on fait en sorte que l'unité de cisaillage utilisée pour l'opération de cisaillage comporte un porte lames supérieur, des première et seconde lames supérieures fixées sur le porte lames supérieur de manière à être distantes entre elles et des première et seconde lames inférieures mobiles par rapport aux lames supérieures et adaptées pour cisailler une bande de tôle, d'autre part on fait en sorte que l'unité de cisaillage comporte au moins une structure de liaison des dites premières lames, cette structure de liaison étant reliée fixement audit châssis, et on réalise l'opération de cisaillage en approchant simultanément les lames supérieures portées par le porte lames supérieur des lames inférieures.
Ce mode de réalisation permet de limiter les incertitudes de positionnement relatif des découpes puisque :
- d'une part les découpes de queue et de tête des bandes sont respectivement réalisées simultanément par des lames fixes l'une par rapport à l'autre montées sur le porte lames ce qui équilibre les efforts de coupes ; et
- d'autre part les lames supérieures et inférieures sont reliées entre elles via la structure de liaison reliée fixement audit châssis.
Pour la mise en oeuvre du procédé de raboutage de l'invention on fait en sorte de réaliser le soudage à l'aide d'une tête de soudage se déplaçant dans un espace situé entre le porte lames supérieur et les lames inférieures, lesdites lames étant disposées pour être mobiles entre lesdits premier et second mors.
Le fait de déplacer une tête de soudage entre le porte lames supérieur et les lames inférieures permet de réaliser le soudage directement entre les lames supérieures et inférieures sans être obligé de déplacer les tête et queue de bande hors de l'espace inter lames. Il en résulte un gain de temps, d'espace et de précision puisque le déplacement des têtes et queue de tôles cisaillées est réduit au minimum.
Préférentiellement cette espace pour le déplacement de la tête de soudage est prévu pour exister uniquement lorsque le porte lames supérieur est écarté des lames inférieures d'au moins une distance minimale prédéterminée.

D'autres caractéristiques et avantages de l'invention ressortiront clairement de la description qui en est faite ci-après, à titre indicatif et nullement limitatif, en référence aux dessins annexés, dans lesquels:
la figure 1 représente un dispositif de l'art antérieur comportant une unité de cisaillage mobile par rapport au châssis principal du dispositif ;
les figures 2a et 2b représentent un dispositif conforme à l'invention respectivement vu en perspective arrière et avant ;
la figure 3 est une vue de côté schématique du dispositif de l'invention selon un plan parallèle à l'axe de défilement de bande de tôle alors que les tôles défilent dans le dispositif de raboutage ;
les figures 4a, 4b, 4c, 4d, 4e, 4f, 5a et 5b représentent successivement les étapes chronologiques mises en oeuvre par le dispositif de l'invention pour rabouter deux bandes de tôles disjointes ;
la figure 6 est une représentation schématique d'une unité de cisaillage en col de cygne et d'une unité de cisaillage de type presse à cisailler comportant deux montants reliés fixement au châssis ainsi que des schémas montrant les efforts et flèches lors de la coupe de tôle pour chacune de ces unités de cisaillage, cette figure démontre l'avantage d'une presse à cisailler par rapport à une cisaille en col de cygne.

Comme annoncé précédemment, l'invention concerne un dispositif de raboutage 0 pour rabouter par soudage Laser des bandes de tôles B après en avoir découpé les extrémités Bt et Bq.

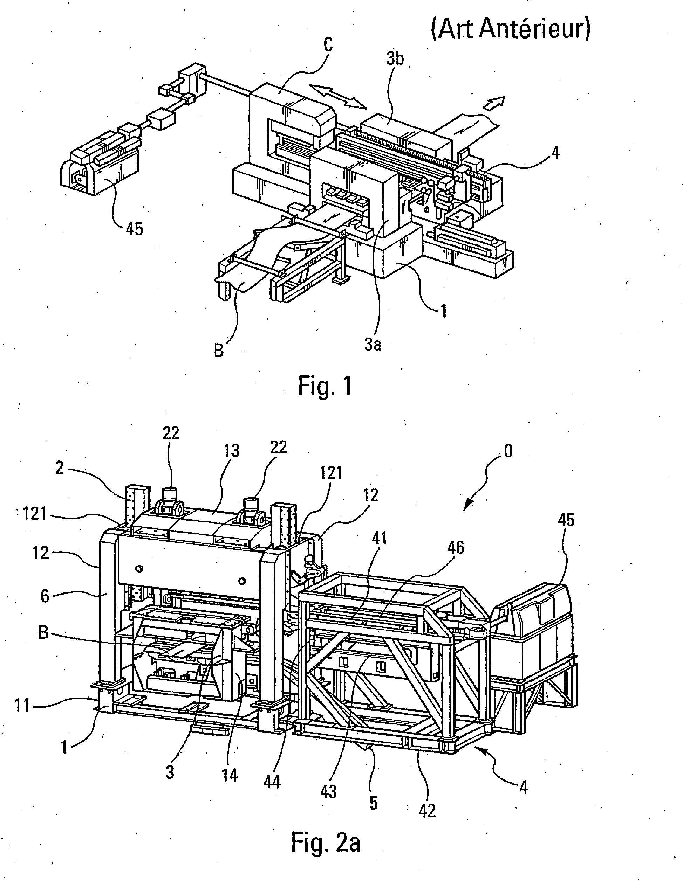

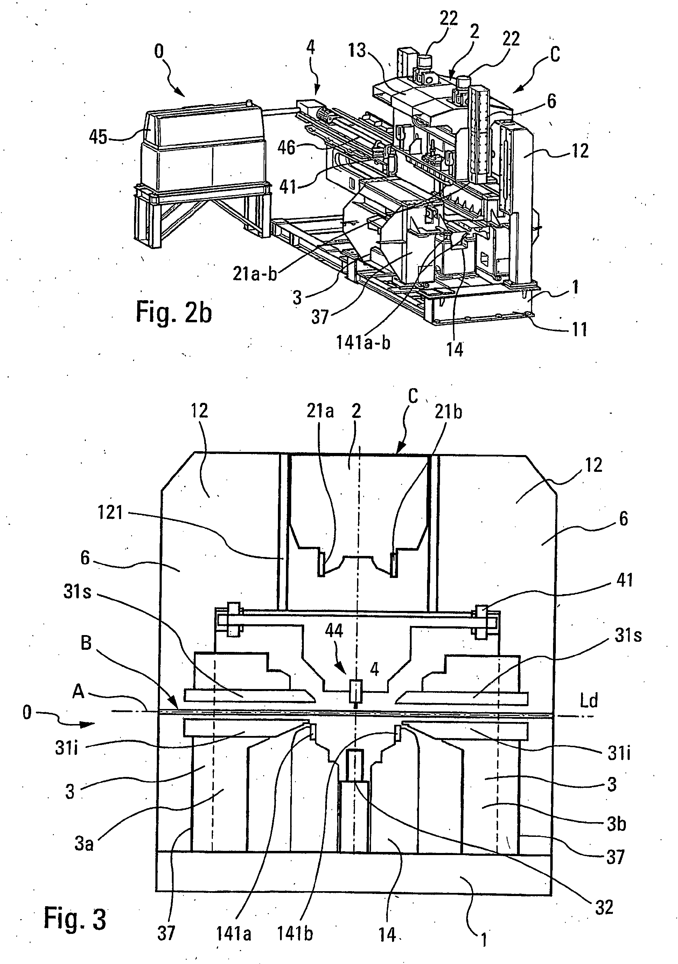

Le dispositif de l'invention tel que représenté aux figures 2a à 3 comporte un châssis principal 1 fixé au sol et comportant une plateforme 11, deux montants 12 parallèles entre eux et solidarisés par une poutre 13 et un bâti de cisaillage inférieur 14 équipé de ses deux lames inférieures 141a, 141b. Le bâti de cisaillage inférieur 14 est adapté pour permettre de faire varier l'écartement des deux lames inférieures afin de permettre un réglage de jeu pour chaque paire de lames inférieure et supérieure. A cette fin des portions du bâti sont montées sur des glissières parallèles à l'axe de défilement de bande de tôle.
Les deux montants 12 portent chacun un système de glissières verticales 121 qui reçoivent un bâti de cisaillage supérieur 2 et ses deux lames 21a et 21b. Le bâti de cisaillage supérieur 2 est actionné verticalement par des vérins de cisaillage 22 supportés par la poutre 13.
L'unité de cisaillage C du dispositif de l'invention comporte les lames supérieures 21a, 21b et inférieures 141a et 141b ainsi qu'une structure de liaison 6 pour relier entre elles les lames supérieures et inférieures, cette structure de liaison 6 comportant les montants 12. Cette structure de liaison est fixe par rapport au châssis 1 et s'étend autour de l'axe A de défilement de bande de tôle. Cette structure 6 est ainsi particulièrement rigide et symétrique par rapport à l'axe de défilement A. Les lames supérieures sont montées fixement sur un porte lames afin que l'écartement entre les lames supérieures reste constant durant une coupe et afin d'équilibrer les efforts de coupe. Le porte lames supérieur est adapté pour permettre le passage d'une tête de soudage laser 4 entre ce porte lames supérieur et les lames inférieures au moins lorsque le porte lames supérieur est écarté des lames inférieures comme c'est le cas sur la figure 3. Sur cette figure 3 on voit que la tête de soudage 4 dispose d'un espace lui permettant de réaliser une soudure au coeur même de l'unité de cisaillage lorsque les lames inférieures et supérieures sont écartées. Cette caractéristique permet une grande précision de positionnement et de soudage ainsi qu'un gain de temps dans l'enchainement entre les opérations de cisaillage puis de soudage.
Il est à noter que quel que soit l'écartement choisi entre les lames le dispositif de l'invention est prévu pour que les lames soient toujours parallèles entre elles . Ce parallélisme garanti que les bords de bandes cisaillés soient eux même parallèles.

De manière à permettre l'automatisation complète de l'opération de raboutage, un dispositif mettant en oeuvre, par exemple, des vérins à vis de précision assure le déplacement des lames supérieures ou préférentiellement des lames inférieures dans le sens d'une augmentation ou d'une diminution du jeu de cisaillage entre lames en fonction des données produit, c'est-à-dire de' données propres aux tôles à couper (nuance d'acier, épaisseur ...). Ces données sont issues de données d'entrée primaire notées PDI pour « Primary Data Input » implantées dans l'automatisme de la ligne comprenant le dispositif de l'invention. Un système électronique de contrôle de jeu peut permettre de commander les vérins à vis de précision pour faire varier le jeu de cisaillage selon le besoin.

Sur le châssis principal 1 sont fixés des ensembles de mors de serrage 3 comprenant un premier mors de serrage 3a et un second mors de serrage 3b.

Chacun des mors 3a, 3b assure la préhension et le déplacement d'une extrémité d'une bande à souder B permettant ainsi de maintenir chacune des bandes à souder dans un mors dédié 3a, 3b. Ces mors sont disposés de part et d'autre de l'espace dans lequel peuvent coulisser les lames et la tête de soudage 4.

Le châssis 1 supporte aussi un système de glissières horizontales 41 perpendiculaires au sens de défilement de la bande B. Ces glissières se poursuivent latéralement à l'extérieur du châssis 1. Ce prolongement est supporté par une structure 42.

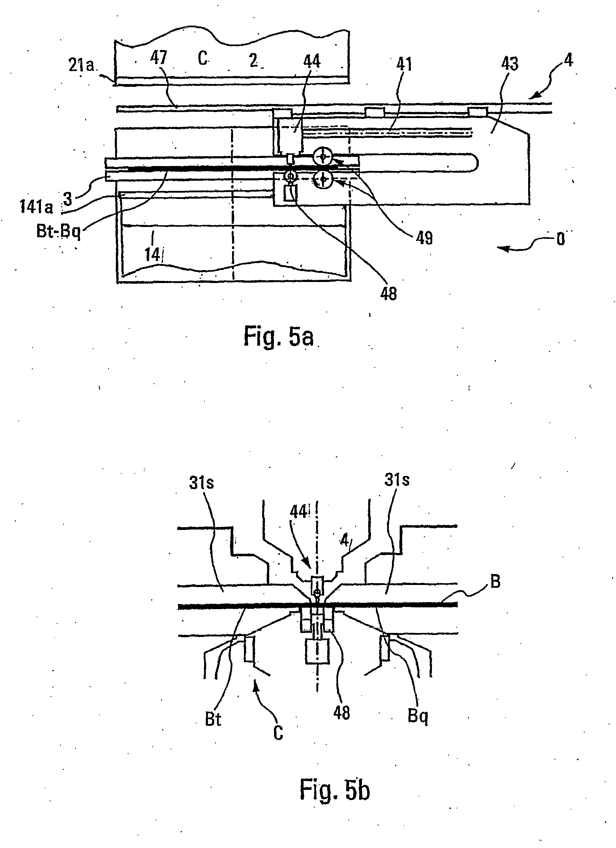

Comme cela est particulièrement apparent sur la figure 5a, le système de glissières 41 supporte le support en col de cygne 43 de la tête de soudage 44 ledit support 43 se déplace sur les glissières 41 de sa position de rangement sous la structure 42 jusqu'à entrer complètement sous les montants 12 du châssis principal 1 afin de réaliser la soudure des deux extrémités de bandes B maintenues par les ensembles de mors de serrage 3. Sur cette figure 5b, on voit que les lames supérieure 21a et inférieure 141a sont écartées pour permettre le coulissement de la tête de soudage 44 qui réalise la soudure.

Le faisceau de soudage Laser est généré par un générateur 4.5 (visible sur les figurés 2a et 2b) fixe situé en extrémité de la structure 42 parallèlement ou perpendiculairement à celle-ci. Ledit faisceau Laser est conduit à la tête de soudage 44 par un chemin optique 46 constitué de miroirs.

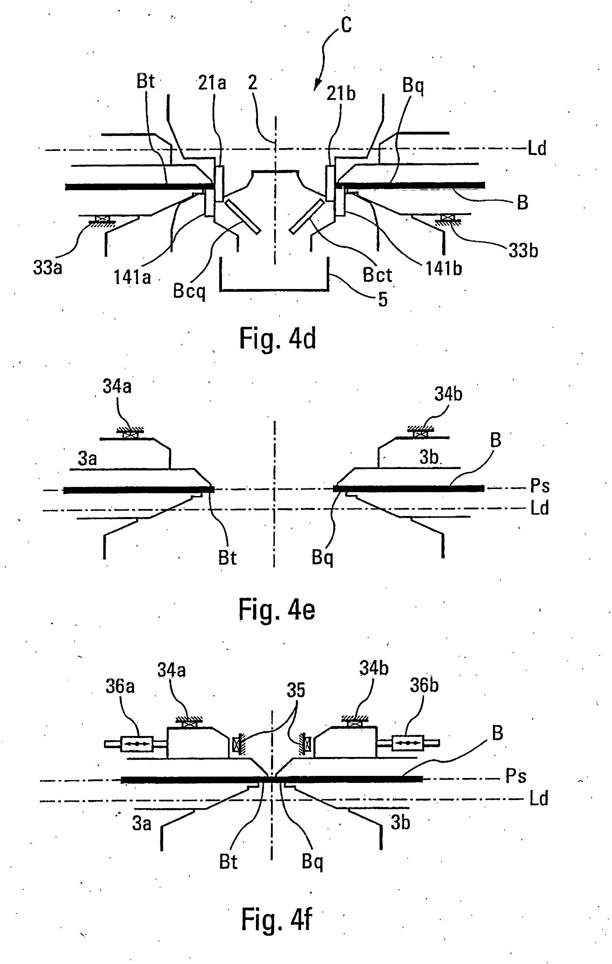

Le châssis 1 supporte aussi un système 5 de récupération et d'évacuation des chutes de bandes cisaillées, ce système est particulièrement visible sur les figures 2a et 4d.

Le dispositif de raboutage 0 de l'invention peut être équipé de dispositifs de préchauffage des bords à souder ainsi que de dispositifs de post-chauffage ou de traitement thermique de la soudure.

Des dispositifs de contrôle de la qualité du joint soudé pendant son exécution peuvent également compléter le dispositif de raboutage 0.

Suivant figure 3, on observe le dispositif de l'invention alors qu'il est en phase de défilement de la bande B dans la ligne, hors opération de soudage (avec la tête de soudage dégagée de l'espace inter lames) :
Les mors 3a et 3b sont au niveau de la ligne de défilement Ld et leurs mâchoires 31s et 31i sont écartées afin de laisser le libre passage à la bande B.
Le bâti de cisaillage supérieur 2 est en position complètement relevée dans ses glissières 121.
Le bâti en col de cygne 43 de l'unité de soudage 4 est en position de rangement.
La butée escamotable 32 est en position basse.

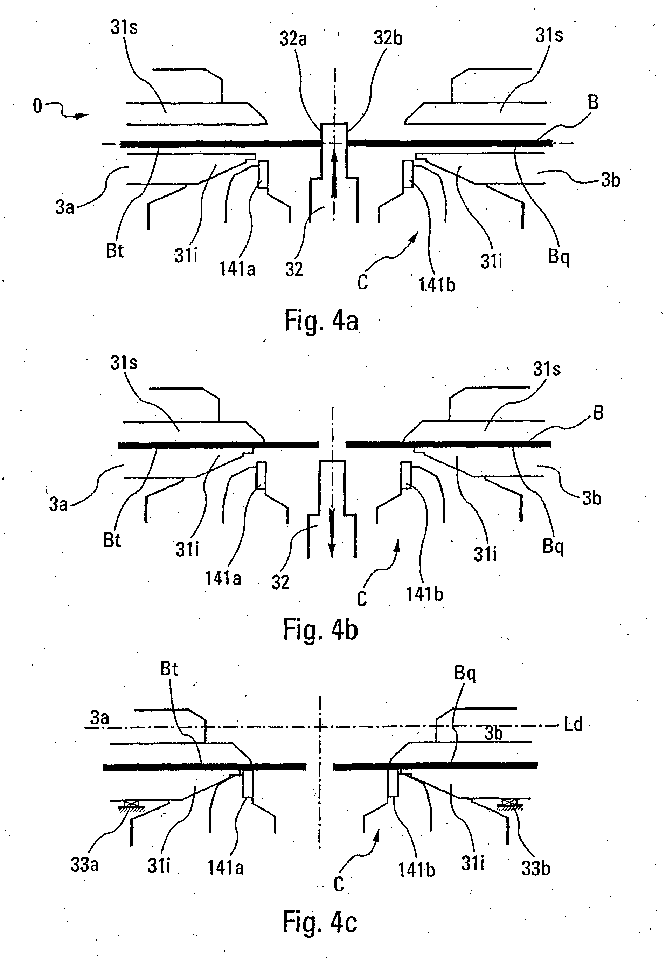

Suivant la figure 4a, la queue de bande Bq et la tête de la bande Bt suivante sont dans l'unité de raboutage afin d'y être raboutées.

La butée escamotable 32 est dans un premier temps mise en position haute et les dispositif de centrage et de guidage de bande B de la ligne de transformation en amont et en aval de l'unité de soudage positionnent la queue de bande Bq et la tête de l'autre bande Bt respectivement en appui sur les faces 32b et 32a de la butée 32. Les mâchoires 31s et 31i des mors 3a et 3b ainsi que le bâti de cisaillage supérieur 2 restent dans leur position d'origine, c'est-à-dire écartés des bandes de tôles. Le bâti en col de cygne 43 de l'unité de soudage 4 est toujours en position de rangement.

Suivant la figure 4b, les mâchoires 31s et 31i des mors 3a et 3b viennent serrer les deux extrémités de bande Bq et Bt. A partir de cet instant les mors restent serrées sur les extrémités de bande afin de les immobiliser dans les mors et ce jusqu'à ce que l'opération de soudage soit terminée (l'opération de soudage apparaît sur les figures 5a et 5b). La butée escamotable 32 redescend en position basse et s'écarte des tôles.

Suivant la figure 4c, les mors 3a et 3b descendent en position de cisaillage au niveau des lames fixes 141a et 141b jusqu'au contact des mâchoires inférieures 31i avec les butées 33a et 33b. Avantageusement, tout ou partie de ces butées peut être réglable en hauteur de manière à faciliter le réglage d'origine de la machine.

Suivant la figure 4d, le bâti de cisaillage supérieur 2 est poussé vers le bas par les vérins de cisaillage 22 les lames supérieures 21a et 21b en coopération avec les lames inférieures 141a et 141c cisaillent les extrémités des bandes Bq et Bt. Les chutes de cisaillage Bcq et Bct sont recueillies par le système d'évacuation 5.

Suivant figure 4e, après remontée du bâti de cisaillage supérieur 2 et donc des lames supérieures, les mors de serrage 3a et 3b transportent verticalement les extrémités de bandes Bq et Bt jusqu'au contact avec des butées supérieures 34a et 34b au niveau du plan de soudage Ps. Avantageusement, tout ou partie de ces butées peut être réglable en hauteur de manière à faciliter le réglage d'origine de la machine.

Suivant figure 4f, les mors de serrage 3a et 3b transportent horizontalement les extrémités de bandes Bq et Bt en restant au niveau du plan de soudage Ps. Un système de déplacement asservi 36a et 36b assure le positionnement relatif des extrémités de bandes Bq et Bt en position requise pour le soudage Laser en prenant en compte certains paramètres issus des données dites PDI tels que l'épaisseur des bandes et la surépaisseur ou la sous épaisseur recherchées.

Un procédé de gestion de la surépaisseur des soudures Laser applicable avec le dispositif de la présente invention est décrit dans le document brevet EP 1 591 190. Il tient compte des imprécisions de cisaillage et de déplacement horizontal des mors 3a et 3b.

Les extrémités de bandes Bt et Bq étant en position requise, c'est-à-dire axées parallèlement aux glissières 41, la tête de soudage 44 assure alors la jonction par soudure.

Dans une variante de réalisation, un seul des deux mors 3a ou 3b est positionné horizontalement grâce au système de déplacement asservi 36a, 36b, l'autre mors vient alors en contact avec des butées latérales 35. Avantageusement, tout ou partie de ces butés peut être réglable afin de faciliter le réglage de la machine.

La présence et l'utilisation conjuguée des ensembles de butées 33, 34, éventuellement 35 et de la butée escamotable 32 ainsi que la mise en oeuvre du procédé de réglage automatique du jeu entre les bords à souder grâce au dispositif 36a, 36b permettent un positionnement précis, rapide et répétitif des têtes et queues des bandes à rabouter. La qualité de positionnement des bords à souder est parfaitement adaptée aux nécessités d'une soudure au Laser et les temps annexes au soudage sont considérablement réduits, diminuant ainsi les coûts d'accumulation de bande.

Suivant figure 5a, le bâti en col de cygne 43 portant la tête de soudage 44 et guidé par les glissières 41 vient déplacer celle-ci au dessus des extrémités à souder Bq et Bt sous l'action de son dispositif de déplacement 47. Le faisceau Laser est initié au bord des extrémités de bandes et se maintient sur toute la largeur des bandes à souder. Avantageusement, deux galets 49 situés immédiatement derrière la tête de soudage et dans l'axe du joint soudé peuvent forger une éventuelle surépaisseur dudit joint.

Suivant figure 5b, deux galets 48 actionnés par un vérin hydraulique ou pneumatique et situés juste sous la tête de soudage 44 assurent un complément de serrage de la face supérieure des extrémités Bq et Bt sur la face inférieure des mâchoires 31s.

## Revendications

1. Dispositif de raboutage (0) par soudure Laser de bandes de tôles (B) défilant dans une installation sidérurgique de traitement en continu comportant au moins :
- un châssis principal (1) ;
- une unité de soudage au Laser (4) comportant un générateur (45) de faisceau Laser pour le soudage de bandes de tôles à rabouter (B) ;
- une unité de mors de serrage (3) portée par ledit châssis (1) pour le serrage de bandes de tôles (B) cette unité de mors comportant des premier et second mors de serrage (3a, 3b) chacun adapté pour serrer une bande de tôle (B) ;
- une unité de cisaillage (C) pour le cisaillage de têtes (Bt) et queues (Bq) de bandes de tôles à rabouter (B) ;
où l'unité de cisaillage (C) comporte un porte lames supérieur, des première et seconde,lames supérieures (21a, 21b) fixées sur ledit porte lames supérieur de manière à être distantes entre elles, et des première et seconde lames inférieures (141a, 141b) mobiles par rapport aux lames supérieures et adaptées pour cisailler une bande de tôle (B) et en ce que l'unité de cisaillage (C) comporte au moins une structure de liaison (6) desdites premières lames (21a, 141a), cette structure de liaison (6) étant reliée fixement audit châssis (1), **caractérisé par** l'unité de soudage comportant en outre une tête de soudage montée coulissante de manière à pouvoir se déplacer dans un espace situé entre le porte lames supérieur et les lames inférieures.

2. Dispositif (0) selon la revendication 1, **caractérisé en ce que** lesdites lames (21a, 141a) sont disposées pour être mobiles entre lesdits premier et second mors (3a, 3b).

3. Dispositif (0) selon l'une quelconque des revendications précédentes, **caractérisé en ce que** ladite structure de liaison (6) comporte deux montants (12) reliés fixement audit châssis principal (1) et une poutre (13) s'étendant entre ces montants (12), ladite au moins une lame supérieure (21a) étant supportée par l'intermédiaire de ladite poutre (13).

4. Dispositif (0) selon la revendication 3, **caractérisé en ce que** ladite structure de liaison (6) comporte des vérins de cisaillage (22) supportés par ladite poutre (13) pour déplacer lesdites première et seconde lames supérieures (21a, 21b) par rapport audites première et seconde lames inférieures (141a, 141b).

5. Dispositif (0) selon l'une quelconque des revendications précédentes, **caractérisé en ce que** les dites lames supérieures (21a, 21b) et inférieures (141a, 141b) sont montées mobiles de manière à adopter une position de croisement desdites lames supérieures (21a, 21b) et inférieures (141a, 141b) dans laquelle les première lames inférieure et supérieure (21a, 141a) sont éloignées entre elles d'un premier jeu de cisaillage et dans laquelle les seconde lames inférieure et supérieure (21b, 141b) sont éloignées entre elle d'un second jeu de cisaillage, le dispositif (0) comportant en outre des moyens mécaniques d'actionnement adaptés pour faire varier lesdits premier et second jeux de cisaillage sous l'action d'un système électronique de contrôle de jeu de cisaillage.

6. Dispositif (0) selon la revendication 5, **caractérisé en ce que** lesdits moyens mécaniques d'actionnement sont adaptés pour déplacer lesdites lames inférieures l'une par rapport à l'autre et ainsi faire varier lesdits premier et second jeux de cisaillage.

7. Dispositif (0) selon la revendication 5 ou 6, **caractérisé en ce que** le système électronique de contrôle comporte des moyens de collecte de données adaptés pour collecter des données propres à la bande de tôle à cisailler (B) et adapté pour faire varier automatiquement lesdits jeux de cisaillage à l'aide desdits moyens d'actionnement en fonction desdites données collectées.

8. Dispositif (0) selon l'une quelconque des revendications précédentes, **caractérisée en ce que** l'unité de soudage au laser (4) comporte une structure en col de cygne (43) montée en translation par rapport audit châssis (1) et **en ce que** la tête de soudage (44) est portée par la structure en col de cygne (43).

9. Dispositif (0) selon les revendications 3 et 8 combinées, **caractérisé en ce que** l'un au moins des montants (12) comporte une découpe traversant ce montant et **en ce qu'**au moins une portion de ladite structure en col de cygne (43) portant la tête de soudage (44) est disposée à l'intérieur de cette découpe, de manière à traverser ce montant (12) et à pouvoir y coulisser.

10. Dispositif (0) selon l'une au moins des revendications précédentes combinée à la revendication 8, **caractérisé en ce que** la tête de soudage (44) est montée coulissante par rapport à la structure en col de cygne (43) par l'intermédiaire d'un système de glissières (41).

11. Dispositif selon l'une quelconque des revendications précédentes, **caractérisé en ce que** les premier et second mors de serrage (3a, 3b) sont éloignés l'un de l'autre et l'unité de mors de serrage (3) comporte des moyens mécaniques de liaison des mors audit châssis principal (1) adaptés pour déplacer lesdits premier et second mors (3a, 3b) l'un par rapport à l'autre et par rapport au châssis principal (1).

12. Procédé de raboutage par soudure Laser de bandes de tôles (B) défilant dans une installation sidérurgique de traitement, où l'on serre une queue d'une bande de tôle (B) à rabouter à l'aide d'un premier mors de serrage (3a) et on serre une tête d'une bande de tôle (B) à rabouter à l'aide d'un second mors de serrage (3b) puis on cisaille la tête et la queue des dites bandes de tôles (B) à l'aide d'une unité de cisaillage (C) comportant un porte lames supérieur et des lames inférieures, puis on rapproche et on positionne les bandes de tôles (B) ainsi cisaillées et on les soude à l'aide d'un faisceau Laser, **caractérisé en ce que** le soudage est réalisé à l'aide d'une tête de soudage se déplaçant dans un espace situé entre le porte lames supérieur et les lames inférieures, lesdites lames étant disposées pour être mobiles entre lesdits premier et second mors, ces opérations de cisaillement, de rapprochement, de positionnement et de soudage étant réalisées sans desserrer les mors (3a, 3b).

13. Procédé de raboutage par soudure Laser selon la revendication 12, **caractérisé en ce qu'**on fait en sorte que l'unité de cisaillage (C) utilisée pour l'opération de cisaillage comporte des première et seconde lames supérieures (21a, 21b) fixées sur le porte lames supérieur de manière à être distantes entre elles et des première et seconde lames inférieures (141a, 141b) mobiles par rapport aux lames supérieures et adaptées pour cisailler une bande de tôle (B), on fait en sorte que l'unité de cisaillage (C) comporte au moins une structure de liaison (6) des dites premières lames (21a, 141a), cette structure de liaison (6) étant reliée fixement audit châssis (1), et on fait en sorte de réaliser l'opération de cisaillage en approchant simultanément les lames supérieures portées par le porte lames supérieur des lames inférieures.

## Patentansprüche

1. Vorrichtung zum Verbinden (0) durch Laserschweißen von Bahnmetallstreifen (B), die in einer hüttentechnischen Endlosverarbeitungsanlage durchlaufen, umfassend mindestens:
- ein Hauptgestell (1);
- eine Laserschweißeinheit (4) mit einem Laserstrahlgenerator (45) zum Schweißen von zu verbindenden Bahnmetallstreifen (B);
- eine Klemmbackeneinheit (3), die von dem Gestell (1) getragen wird, zum Einklemmen von Bahnmetallstreifen (B), wobei diese Backeneinheit erste und zweite Klemmbacken (3a, 3b) umfasst, die jeweils geeignet sind, einen Bahnmetallstreifen (B) einzuklemmen;
- eine Schereinheit (C) zum Scheren von Anfängen (Bt) und Enden (Bq) von zu verbindenden Bahnmetallstreifen (B);
wobei die Schereinheit (C) einen oberen Klingenträger, erste und zweite obere Klingen (21a, 21b), die an dem oberen Klingenträger so befestigt sind, dass sie voneinander beabstandet sind, und erste und zweite untere Klingen (141a, 141b), die in Bezug auf die oberen Klingen beweglich sind und zum Scheren eines Bahnmetallstreifens (B) geeignet sind, umfasst und die Schereinheit (C) mindestens eine Verbindungsstruktur (6) zum Verbinden der ersten Klingen (21a, 141a) umfasst, wobei diese Verbindungsstruktur (6) fest mit dem Gestell (1) verbunden ist, **gekennzeichnet durch** die Schweißeinheit, die darüber hinaus einen Schweißkopf umfasst, der verschieblich angebracht ist, sodass er sich in einem Raum zwischen dem oberen Klingenträger und den unteren Klingen bewegen kann.

2. Vorrichtung (0) nach Anspruch 1, **dadurch gekennzeichnet, dass** die Klingen (21a, 141a) so angeordnet sind, dass sie zwischen den ersten und zweiten Backen (3a, 3b) beweglich sind.

3. Vorrichtung (0) nach einem beliebigen der vorangehenden Ansprüche, **dadurch gekennzeichnet, dass** die Verbindungsstruktur (6) zwei Ständer (12), die fest mit dem Hauptgestell (1) verbunden sind, und einen Träger (13), der sich zwischen diesen Ständern (12) erstreckt, umfasst, wobei die mindestens eine obere Klinge (21a) über den Träger (13) gehaltert wird.

4. Vorrichtung (0) nach Anspruch 3, **dadurch gekennzeichnet, dass** die Verbindungsstruktur (6) Scherzylinder (22) umfasst, die von dem Träger (13) gehaltert werden, um die ersten und zweiten oberen Klingen (21a, 21b) in Bezug auf die ersten und zweiten unteren Klingen (141a, 141b) zu bewegen.

5. Vorrichtung (0) nach einem beliebigen der vorangehenden Ansprüche, **dadurch gekennzeichnet, dass** die oberen Klingen (21a, 21b) und die unteren Klingen (141a, 141b) beweglich gelagert sind, sodass sie eine Kreuzstellung der oberen Klingen (21a, 21b) und unteren Klingen (141a, 141b) einnehmen, in der die ersten unteren und oberen Klingen (21a, 141a) voneinander um einen ersten Scherspalt beabstandet sind und in der die zweiten unteren und oberen Klingen (21b, 141b) um einen zweiten Scherspalt voneinander beabstandet sind, wobei die Vorrichtung (0) darüber hinaus mechanische Betätigungsmittel umfasst, die geeignet sind, den ersten und zweiten Scherspalt unter der Wirkung eines elektronischen Scherspaltsteuerungssystems ändern zu lassen.

6. Vorrichtung (0) nach Anspruch 5, **dadurch gekennzeichnet, dass** die mechanischen Betätigungsmittel geeignet sind, die unteren Klingen in Bezug aufeinander zu bewegen und so die ersten und zweiten Scherspalte ändern zu lassen.

7. Vorrichtung (0) nach Anspruch 5 oder 6, **dadurch gekennzeichnet, dass** das elektronische Steuerungssystem Datenerfassungsmittel umfasst, die geeignet sind, spezifische Daten des zu scherenden Bahnmetallstreifens (B) zu erfassen, und geeignet sind, die Scherspalte mithilfe der Betätigungsmittel in Abhängigkeit von den erfassten Daten automatisch ändern zu lassen.

8. Vorrichtung (0) nach einem beliebigen der vorangehenden Ansprüche, **dadurch gekennzeichnet, dass** die Laserschweißeinheit (4) eine Schwanenhalsstruktur (43) umfasst, die in Bezug auf das Gestell (1) translatorisch verschiebbar gelagert ist, und dass der Schweißkopf (44) von der Schwanenhalsstruktur (43) getragen wird.

9. Vorrichtung (0) nach den kombinierten Ansprüchen 3 und 8, **dadurch gekennzeichnet, dass** mindestens einer der Ständer (12) einen Ausschnitt umfasst, der diesen Ständer durchquert, und dass mindestens ein Abschnitt der Schwanenhalsstruktur (43), die den Schweißkopf (44) trägt, innerhalb dieses Ausschnitts angeordnet ist, sodass er diesen Ständer (12) durchquert und darin verschoben werden kann.

10. Vorrichtung (0) nach mindestens einem der vorangehenden Ansprüche, kombiniert mit Anspruch 8, **dadurch gekennzeichnet, dass** der Schweißkopf (44) über ein Gleitschienensystem (41) in Bezug auf die Schwanenhalsstruktur (43) verschieblich gelagert ist.

11. Vorrichtung nach einem beliebigen der vorangehenden Ansprüche, **dadurch gekennzeichnet, dass** die ersten und zweiten Klemmbacken (3a, 3b) voneinander beabstandet sind und die Klemmbackeneinheit (3) mechanische Mittel zum Verbinden der Backen mit dem Hauptgestell (1) umfasst, die geeignet sind, die ersten und zweiten Backen (3a, 3b) in Bezug aufeinander und in Bezug auf das Hauptgestell (1) zu bewegen.

12. Vorrichtung zum Verbinden durch Laserschweißen von Bahnmetallstreifen (B), die in einer hüttentechnischen Verarbeitungsanlage durchlaufen, in der ein zu verbindendes Ende eines Bahnmetallstreifens (B) mithilfe einer ersten Klemmbacke (3a) eingeklemmt wird und ein Anfang eines zu verbindenden Bahnmetallstreifens (B) mithilfe einer zweiten Klemmbacke (3b) eingeklemmt wird und dann der Anfang und das Ende der Bahnmetallstreifen (B) mithilfe einer Schereinheit (C) geschert werden, die einen oberen Klingenträger und untere Klingen umfasst, und dann die so gescherten Bahnmetallstreifen (B) zueinander geführt und positioniert werden und mithilfe eines Laserstrahls geschweißt werden, **dadurch gekennzeichnet, dass** das Schweißen mithilfe eines Schweißkopfes erfolgt, der sich in einem Raum zwischen dem oberen Klingenträger und den unteren Klingen bewegt, wobei die Klingen so angeordnet sind, dass sie zwischen den ersten und zweiten Backen beweglich sind, wobei diese Vorgänge des Scherens, Zueinanderführens, Positionierens und Schweißens ausgeführt werden, ohne die Backen (3a, 3b) zu lösen.

13. Vorrichtung zum Verbinden durch Laserschweißen nach Anspruch 12, **dadurch gekennzeichnet, dass** dafür gesorgt wird, dass die für den Schervorgang verwendete Schereinheit (C) erste und zweite obere Klingen (21a, 21b), die an dem oberen Klingenträger so befestigt sind, dass sie voneinander beabstandet sind, und erste und zweite untere Klingen (141a, 141b), die in Bezug auf die oberen Klingen beweglich sind und zum Scheren eines Bahnmetallstreifens (B) geeignet sind, umfasst, und dafür gesorgt wird, dass die Schereinheit (C) mindestens eine Verbindungsstruktur (6) zum Verbinden der ersten Klingen (21a, 141a) umfasst, wobei diese Verbindungsstruktur (6) fest mit dem Gestell (1) verbunden ist, und dafür gesorgt wird, dass der Schwervorgang ausgeführt wird, indem die vom oberen Klingenträger getragenen oberen Klingen gleichzeitig an die unteren Klingen herangeführt werden.

## Claims

1. Device for laser weld joining (0) of sheet metal strips (B) running in a continuous processing steelworks, comprising at least:
- a main frame (1),
- a laser welding unit (4) including a generator (45) for a laser beam for welding the sheet metal strips (B) to be joined,
- a clamping unit (3) carried by said main frame (1) for clamping sheet metal strips (B), said clamping unit including first and second clamps (3a, 3b), each adapted to clamp a sheet metal strip (B),
- a shearing unit (C) for shearing heads (Bt) and tails (Bq) of sheet metal strips (B) to be joined,
said shearing unit (C) including an upper blade holder, first and second upper blades (21a, 21b) fastened to said upper blade holder in spaced relation with one another, and first and second lower blades (141a, 141b) which can move relative to said upper blades and are adapted to shear a sheet metal strip (B) and in that the shearing unit (C) has at least one joint structure (6) of said first blades (21a, 141a), said joint structure (6) being in fixed relation to said frame (1),
**characterised in that** the welding unit further includes a welding head slidably mounted so that it can move in a space located between said upper blade holder and said lower blades.

2. Device (0) according to claim 1, **characterised in that** said blades (21a, 141a) are arranged so that they can move between said first and second clamps (3a, 3b).

3. Device (0) according to any one of the preceding claims, **characterised in that** said joint structure (6) comprises two posts (12) connected in fixed relation to said main frame (1) and a beam (13) extending between said posts (12), said at least one upper blade (21a) being supported via said beam (13).

4. Device (0) according to claim 3, **characterised in that** said joint structure (6) comprises shearing jacks (22) supported by said beam (13) for moving said first and second upper blades (21a, 21b) relative to said first and second lower blades (141a, 141b).

5. Device (0) according to any one of the preceding claims, **characterised in that** said upper blades (21a, 21b) and said lower blades (141a, 141b) are mounted so that they can move in order to adopt a position where said upper blades (21a, 21b) and lower blades (141a, 141b) meet wherein said first lower and upper blades (21a, 141a) are a first blade clearance apart and wherein said second lower and upper blades (21b, 141b) are a second blade clearance apart, said device (0) further comprising mechanical operating means adapted to vary said first and second blade clearances under the operation of an electronic system for blade clearance control.

6. Device (0) according to claim 5, **characterised in that** said mechanical operating means are adapted to move said lower blades relative to one another for varying said first and second blade clearances.

7. Device (0) according to claim 5 or claim 6, **characterised in that** said electronic control system comprises data collection means adapted to collect data specific to the sheet metal strip (B) to be sheared and adapted to vary said blade clearances automatically with the aid of said operating means according to the data collected.

8. Device (0) according to any one of the preceding claims, **characterised in that** said laser welding unit (4) has a gooseneck-shaped structure (43) mounted for translation relative to said frame (1) and **in that** the welding head (44) is carried by the gooseneck-shaped structure (43).

9. Device (0) according to claims 3 and 8 combined, **characterised in that** at least one of the posts (12) has a cut-out crossing the post and **in that** at least a part of said gooseneck-shaped structure (43) carrying said welding head (44) is arranged inside said cut-out, in order to cross said post (12) and to be able to slide therein.

10. Device (0) according to at least one of the preceding claims combined with claim 8, **characterised in that** said welding head (44) is mounted for sliding relative to said gooseneck-shaped structure (43) via a system of guides (41).

11. Device according to any one of the preceding claims, **characterised in that** the first and second clamps (3a, 3b) are arranged in spaced relation with one another and the clamping unit (3) comprises mechanical means linking said clamps to said main frame (1) adapted to move said first and second clamps (3a, 3b) relative to one another and relative to said main frame (1).

12. Method for laser weld joining of sheet metal strips (B) running in a processing steelworks, which comprises holding a tail of a sheet metal strip (B) to be joined with the aid of a first clamp (3a) and holding a head of a sheet metal strip (B) to be joined with the aid of a second clamp (3b), then shearing the head and the tail of said sheet metal strips (B) with the aid of a shearing unit (C) having an upper blade holder and lower blades, subsequently moving the sheet metal strips (B) so sheared closer together and positioning them and welding them with the aid of a laser beam, **characterised in that** the welding is carried out with the aid of a welding head moving in a space situated between the upper blade holder and the lower blades, said blades being arranged so that they can move between said first and second clamps, these shearing, moving, positioning and welding operations being carried out without releasing the clamps (3a, 3b).

13. Method for laser weld joining according to claim 12, **characterised in that** the shearing unit (C) used for the shearing operation has first and second upper blades (21a, 21b) fastened to the upper blade holder in spaced relation and having first and second lower blades (141a, 141b) which can move relative to the upper blades and are adapted to shear a sheet metal strip (B), the shearing unit (C) comprising at least a joint structure (6) of said first blades (21a, 141a), said joint structure (6) being fixed relative to said frame (1) and the shearing operation comprising simultaneously bringing the upper blades, carried by the upper blades holder, and the lower blades closer together.
